# EUROPEAN PATENT APPLICATION

(11) **EP 2 395 787 A1**
(43) Date of publication of application: **14.12.2011**
(21) Application number: 09835988.8
(22) Date of filing: 02.09.2009
(51) Int. Cl.: H04W 28/04

(54) **METHOD AND SYSTEM FOR RANDOM ACCESS**

(30) Priority: 31.12.2008 CN 200810186871
(71) Applicant: ZTE Corporation, Shenzhen, Guangdong 518057 (CN)
(72) Inventor: ZHANG, Xianzhou, Shenzhen Guangdong 518057 (CN); YI, Hongfeng, Shenzhen Guangdong 518057 (CN); ZHANG, Wenying, Shenzhen Guangdong 518057 (CN)
(74) Representative: Jansen, Cornelis Marinus
(86) International application number: PCT/CN2009/073709
(87) International publication number: WO 2010/075701

(57) **Abstract**

The present invention discloses a method and a system for random access, wherein the method includes: the network side sending to UE a dedicated random access preamble index of the UE; the UE sending a random access request to the network side according to the received dedicated random access preamble index; and the network side allocating PUCCCH (Physical Uplink Common Control Channel) resources and SRS (Sounding Reference Signal) resources for the UE according to the random access request, and then sending the allocated PUCCCH resources and SRS resources to the UE. This technical solution provided by this invention omits the complicated data forwarding process, solves the problem of long latency during restoring synchronization, shortens the time delay of data transmission, reduces the hardware requirements of the network side devices and enhances user experience.

## Description

### Field of the Invention

The present invention relates to the communication field, in particular to a method and a system for random access.

### Background of the Invention

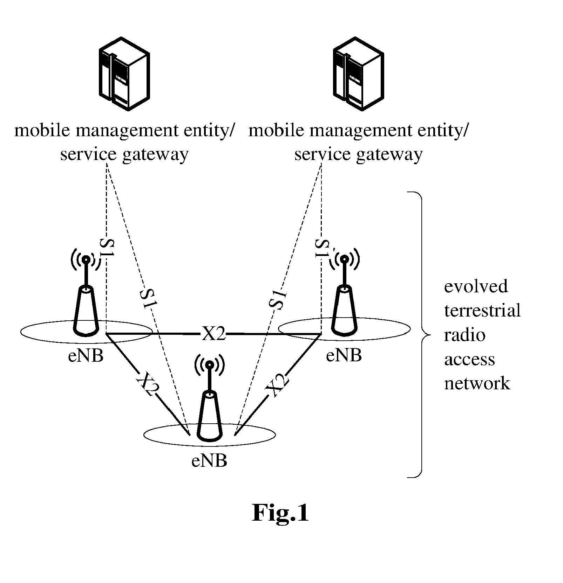

Fig. 1 is a structural block diagram of Long Term Evolution (abbreviated as LTE) of mobile communication system. As shown in Fig. 1, the system includes: a core network and an access network. The core network is responsible for the interconnection and intercommunication with other communication systems, bearer management, authentication and authorization, and routing selection. The core network includes a mobile management entity and a service gateway. The access network is responsible for radio resources management, IP header compression, user data encryption, and measurement. The access network includes a plurality of evolved NodeBs (abbreviated as eNBs). In the system, the data is interconnected and intercommunicated between the core network and the access network via an S1 (S1 is an interface between the core network and the access network) interface, and the data is interconnected and intercommunicated among different eNBs in the access network via X2 interfaces.

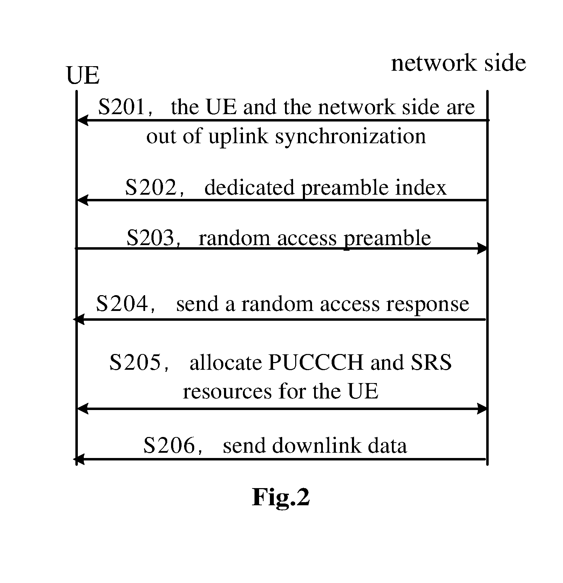

Currently, if a user equipment (abbreviated as UE) and the network side have already achieved uplink synchronization and downlink synchronization therebetween and then they are out of uplink synchronization due to certain reasons, such as expiration of a time alignment (abbreviated as TA) timer, and in this situation, the network side needs to interact messages with the UE so as to restore uplink synchronization. Specifically, Fig. 2 is a signaling flow of UE restoring synchronization on the network side in related art. As shown in Fig. 2, this signaling flow mainly includes the following process (Steps S201 to S206):
Step S201: the UE and the network side are out of uplink synchronization due to the expiration of the TA timer;
Step S202: the network side sends data to the UE, i.e. sends to the UE a dedicated preamble index of this UE via a common control channel;
Step S203: When receiving this dedicated preamble index, the UE determines a dedicated preamble sequence, which is allocated for the UE by the network side, corresponding to this dedicated preamble index, and sends to the network side a random access request message which carries this dedicated preamble sequence;
Step S204: the network side allocates a TA for the UE, and sends to the UE a random access response message which carries this TA;
Step S205: the UE receives this random access response message and completes the synchronization between the network side and the UE, and then the network side reallocates and sends the physical uplink common control channel and sounding reference signal (abbreviated as SRS) resources to the UE through radio resource control (abbreviated as RRC); and
Step S206: after the reallocation through the RRC, the UE sends downlink data to the network side.

In the above process, when the network side and UE are out of uplink synchronization, the UE needs to release the PUCCCH and SRS resources allocated by the network side; and then, when the network side needs to send data to the UE, the synchronization between the UE and the network side will be achieved by means of a non-contention-based random access process. In the process, during restoration, the media access control (abbreviated as MAC) needs to inform RRC to send the physical uplink control channel (abbreviated as PUCCH, also referred to as physical uplink common control channel, abbreviated as PUCCCH) and SRS resources to the UE through an RRC message before the data are sent. In this procedure, since the PUCCCH and SRS resources are sent from the MAC to the RRC and then from the MAC to the UE, which leads to long latency during the whole synchronization restoration.

However, no effective solution is proposed for the problem of long latency during the synchronization restoration between the UE and the network side in related art.

### Summary of the Invention

The present invention is proposed in view of the problems of long latency during the synchronization restoration between the UE and the network side existed in related art, and therefore the invention provides a method and a system for random access to solve the above problem.

A method for random access is provided according to one aspect of the present invention, and this method is used for allocating resources for a UE when the UE and a network side are out of synchronization.

The method for random access according to one aspect of the present invention includes: the network side sending to the UE a dedicated random access preamble index of the UE; the UE sending a random access request to the network side according to the received dedicated random access preamble index; and the network side allocating physical uplink common control channel (PUCCCH) resources and sounding reference signal (SRS) resources for the UE according to the random access request, and sending the allocated PUCCCH resources and SRS resources to the UE.

Preferably, the step of the network side sending the allocated PUCCCH resources and SRS resources to the UE includes: a radio resource control layer at the network side sending the allocated PUCCCH resources and SRS resources to a physical layer at the network side; the physical layer at the network side forwarding the PUCCCH resources and SRS resources to a physical layer of the UE; and the physical layer of the UE forwarding the PUCCCH resources and SRS resources to a radio resource control layer of the UE.

Preferably, this method also includes: the network side allocating a TA for the UE according to the random access request, and sending the allocated TA to the UE.

Preferably, the step of the UE sending the random access request to the network side according to the received dedicated random access preamble index includes: the UE receiving the dedicated random access preamble index and determining a dedicated random access preamble sequence corresponding to the dedicated random access preamble index; and the UE sending the random access request to the network side, wherein the random access request carries the dedicated random access preamble sequence.

A system for random access is provided according to another aspect of the present invention.

The system for random access according to another aspect of the present invention includes an eNodeB and a UE, wherein the eNodeB is configured to send to the UE a dedicated random access preamble index of the UE, allocate, in response to a random access request from the UE, physical uplink common control channel (PUCCCH) resources and sounding reference signal (SRS) resources for the UE, and send the allocated PUCCCH resources and SRS resources to the UE; and the UE is configured to send the random access request to the eNodeB according to the received dedicated random access preamble index.

Preferably, the eNodeB is also configured to allocate a TA for the UE according to the random access request, and send the allocated TA to the UE.

In virtue of at least one of the above technical solutions of the present invention, the network side sends the PUCCCH and SRS resources to the UE via a random access response message, which omits the complicated data forwarding process in related art, thereby solves the problem of long latency during synchronization restoration between UE and the network side, shortens the time of data transmission, reduces the hardware requirements of the network side devices, and enhances user experience.

### Brief Description of the Accompanying Drawings

The drawings herein are used to provide a further understanding of the present invention and form a part of the specification, which are used to explain the present invention together with the embodiments of the present invention without unduly limiting the scope of the present invention. In the drawings:
Fig. 1 is a block diagram of the network architecture of an LTE mobile communication system in related art;
Fig. 2 is a flow chart of the random access process when the UE and the network side are out of uplink synchronization in related art;
Fig. 3 is a flow chart of an initial random access process between the UE and the network side in related art;
Fig. 4 is a flow chart of a method for random access according to a method embodiment of the present invention;
Fig. 5 is a flow chart of the detailed process of the method for random access according to a method embodiment of the present invention; and
Fig. 6 is a structural block diagram of a system for random access according to a method embodiment of the present invention.

### Detailed Description of the Embodiments

### Brief Description on Functions

As described above, when the network side and a UE are out of uplink synchronization, the UE will release the PUCCCH and SRS resources allocated by the network side. If the network side continues to perform data transmission with the UE, the network side needs to synchronize with the UE at uplink, and reallocate and send PUCCCH and SRS resources to the UE, that is, if the network side needs to send downlink data to the UE which is in an RRC-connected state but is out of uplink synchronization, the eNodeB will first initiate a random access process to the UE. Based on this, the embodiments of the present invention provide an improved solution for random access. The basic concept of the embodiments of the present invention is as follows: after receiving a random access message from the UE, the network side will allocate SRS resources and PUCCCH resources to the UE, and then send the allocated SRS resources and PUCCCH resources to the UE in a random access response message; after receiving uplink synchronization and PUCCCH and SRS resources, the UE can communicate with the network side normally. This solution can reduce the latency during the restoring uplink synchronization between UE and the network side.

It needs to be noted that the embodiments of the present invention and the features in the embodiments can be combined with each other if there is no conflict.

The preferred embodiments of the present invention will be described in conjunction with the accompanying drawings, and it shall be understood that the preferred embodiments described here are only for the purpose of illustration and not to limit the present invention.

For the convenience of understanding, the technologies related to the embodiments of the present invention will be briefly described before describing the embodiments of the present invention.

In the mobile communication system, preamble sequence is introduced so as to solve the conflict problem when the UEs access the communication system. Specifically, in LTE communication system, in order to avoid conflicts during UE handover and to improve the handover success rate, the preamble sequence is divided into common preamble sequence and dedicated preamble sequence. Fig. 2 shows a random access process when UE and the network are out of uplink synchronization. The initial random access process of the UE and the network side will be described hereinafter in conjunction with the accompanying drawings.

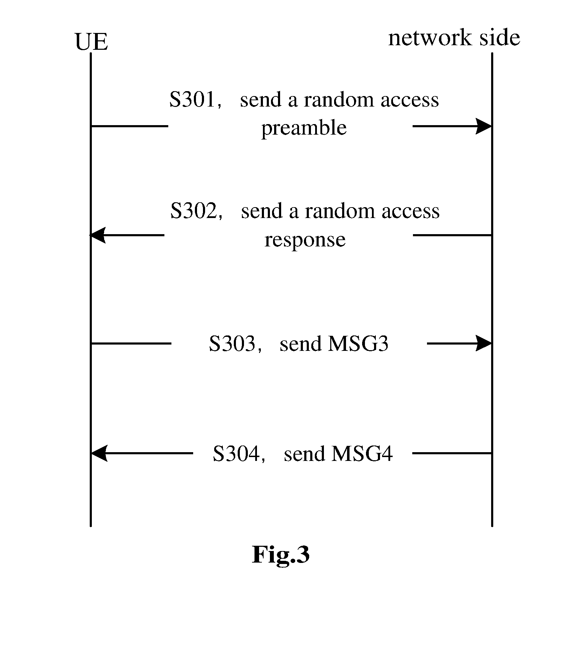

Fig. 3 shows an initial random access process in related art. As shown in Fig. 3, this initial random access process includes the following steps (Steps S301 to S304):
Step S301: the UE sends a random access request message to the network side due to certain reasons (for example, a subscriber initiates a service, subscriber location is updated, etc.);
Step S302: the network side receives the random access request message, allocates a temporary radio network identity (abbreviated as TEMP_RNTI), TA and uplink resources for the UE, and then sends a random access response message to the UE, wherein this random access response message carries the TEMP_RNTI, TA and uplink resources;
Step S303: the UE receives this random access response, sends MSG3 to the network side by using the uplink resources allocated for the UE by the network side, and at the same time starts a TA timer; after receiving the MSG3, the network side responds with MSG4 to the UE; and
Step S304: the UE receives the MSG4 and completes the initial random access process.

### Method embodiments

A method for random access is provided according to an embodiment of the present invention.

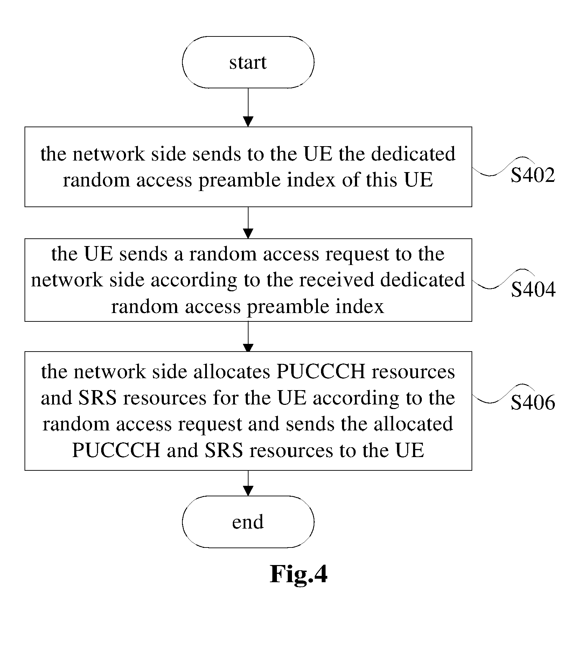

Fig. 4 is a flow chart of a method for random access according to an embodiment of the present invention. It needs to be noted that the technical solution of the method embodiment of the present invention is shown and described in the form of steps in Fig. 4 for the convenience of description. The steps shown in Fig. 4 can be executed by means of a set of computer commands in a computer system. Although Fig. 4 shows a logical order, the steps can be performed in different orders to execute the described steps in some cases. As shown in Fig. 4, this method includes the following steps (Step S402 to S406):
S402: the network side sends to the UE a dedicated random access preamble index of the UE;
S404: the UE sends a random access request to the network side according to the received dedicated random access preamble index; and
S406: the network side allocates PUCCCH and SRS resources for the UE according to the random access request, and sends the allocated PUCCCH and SRS resources to the UE.

During actual implementation, when the UE and the network side are out of uplink synchronization, the network side firstly sends to the UE the dedicated random access preamble index of this UE; after receiving this dedicated random access preamble index, the UE determines the dedicated random access preamble sequence corresponding to the dedicated random access preamble index, and sends a random access request message to the network side, wherein the random access request message carries the dedicated random access preamble sequence.

Then network side allocates PUCCCH and SRS resources to the UE and also allocates TA for the UE according to the random access request.

Finally, the radio resource control layer at the network side sends the allocated PUCCCH, SRS and TA to the physical layer at the network side; then the physical layer at the network side forwards PUCCCH, SRS and TA to the physical layer of the UE, and finally the physical layer of the UE forwards PUCCCH, SRS and TA to the radio resource control layer of the UE.

After receiving the PUCCCH and SRS resources, the UE can communicate with the network side normally.

It can be concluded that the difference between the random access procedures shown in Fig. 4 and Fig. 2 lies in the following: in the procedure shown in Fig. 4, after receiving a random access message from the UE, the network side will allocate SRS resources and PUCCCH resources for the UE and send the allocated SRS resources and PUCCCH resources to the UE in a random access response message, which omits the complicated data forwarding process in the method shown in Fig. 2, solves the problem of long latency during synchronization restoration between the UE and the network side, shortens the time delay of data transmission, reduces the hardware requirements of the network side devices, and enhances user experience.

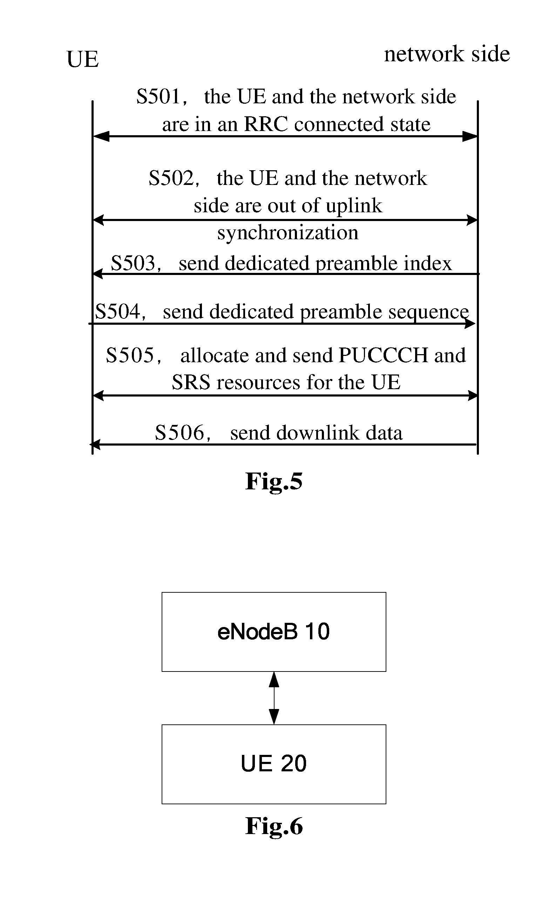

Fig. 5 is a flow chart of the detailed process of the method for random access according to a method embodiment of the present invention. As shown in Fig. 5, this method includes the following steps (Steps S501 to S507):
Step S501: the UE and the network side have already established an RRC connection, and the UE is in RRC-connected state;
Step S502: the UE and the network side are out of uplink synchronization, and the UE releases the SRS resources and PUCCCH resources previously allocated for the UE by the network side;
Step S503: the network side needs to sends data to the UE, and sends to the UE the dedicated preamble index of this UE (corresponding to the above Step 5402);
Step S504: the UE sends a random access request message, which carries a dedicated preamble sequence corresponding to the above dedicated preamble index, to the network side (corresponding to the above Step S404), and at the same time starts a timer;
Step S505: the network side receives the above random access request message, allocates SRS resources and PUCCCH resources for the UE, and sends the SRS resources and PUCCCH resources to the UE via a random access response message (corresponding to the above Step S406);
Step S506: the UE receives this random access response message, communicates with the network side by using the PUCCCH resources and the SRS resources, and starts a TA timer; and
Step S507: the network side sends data to the UE.

### System embodiments

A system for random access is provided according to an embodiment of the present invention.

Fig. 6 shows the structure of a system for random access according to an embodiment of the present invention. As shown in Fig. 6, this system includes an eNodeB 10 and a UE 20.

The eNodeB 10 is used to send to the UE 20 a dedicated random access preamble index of this UE 20, to allocate PUCCCH and SRS resources for UE 20 in response to a random access request from the UE 20, and to send the allocated PUCCCH and SRS resources to the UE 20. The eNodeB 10 is also used for allocating a TA for the UE 20 according to the random access request and sending the allocated TA to the UE 20. The UE20 is used for sending the random access request to the eNodeB10 according to the received dedicated random access preamble index.

During actual implementation, when the UE 20 and the eNodeB 10 are out of uplink synchronization, the eNodeB 10 sends to the UE 20 the dedicated random access preamble index of UE 20; the UE 20 receives this dedicated random access preamble index, determines a dedicated random access preamble sequence corresponding to the dedicated random access preamble index, and sends a random access request message to the eNodeB 10, wherein this random access request message carries the dedicated random access preamble sequence.

The eNodeB10 allocates PUCCCH and SRS resources the UE 20 according to the random access request and allocates TA for the UE 20.

The radio resource control layer of the eNodeB 10 sends the allocated PUCCCH, SRS and TA to the physical layer of eNodeB 10; the physical layer of the eNodeB 10 forwards the PUCCCH, SRS and TA to the physical layer of the UE 20; and the physical layer of the UE 20 forwards the PUCCCH, SRS and TA to the radio resource control layer of the UE 20.

After receiving the PUCCCH and SRS resources, the UE 20 can communicate with the eNodeB 10 normally.

In virtue of the system for random access provided by the embodiments of the present invention, the network side sends the PUCCCH and SRS resources to the UE via a random access response message, which omits the complicated data forwarding process in related art, thereby solves the problem of long latency during synchronization restoration between UE and the network side, shortens the time of data transmission, reduces the hardware requirements of the network side devices, and enhances user experience.

As described above, by means of method and/or system for random access provided by the embodiments of the present invention, the PUCCCH and SRS resources are sent in a random access response message, which omits the complicated data forwarding process in related art, thereby solves the problem of long latency during synchronization restoration between UE and the network side, shortens the time of data transmission, reduces the hardware requirements of the network side devices, and enhances user experience.

The descriptions above are only the preferable embodiments of the present invention, which are not used to restrict the present invention. For those skilled in the art, the present invention may have various changes and variations. Any amendments, equivalent substitutions, improvements, etc. within the spirit and principle of the present invention are all included in the scope of the protection of the present invention.

## Claims

1. A method for random access, used for allocating resources for a user equipment (UE) when the UE and a network side are out of synchronization, **characterized in that** the method comprises:
the network side sending to the UE a dedicated random access preamble index of the UE;
the UE sending a random access request to the network side according to the received dedicated random access preamble index; and
the network side allocating physical uplink common control channel (PUCCCH) resources and sounding reference signal (SRS) resources for the UE according to the random access request, and sending the allocated PUCCCH resources and SRS resources to the UE.

2. The method according to Claim 1, **characterized in that** the step of the network side sending the allocated PUCCCH resources and SRS resources to the UE comprises:
a radio resource control layer at the network side sending the allocated PUCCCH resources and SRS resources to a physical layer at the network side;
the physical layer at the network side forwarding the PUCCCH resources and the SRS resources to a physical layer of the UE; and
the physical layer of the UE forwarding the PUCCCH resources and the SRS resources to a radio resource control layer of the UE.

3. The method according to Claim 1 or 2, **characterized by** further comprising:
the network side allocating a TA for the UE according to the random access request, and sending the allocated TA to the UE.

4. The method according to Claim 1 or 2, **characterized in that** the step of the UE sending the random access request to the network side according to the received dedicated random access preamble index comprises:
the UE receiving the dedicated random access preamble index and determining a dedicated random access preamble sequence corresponding to the dedicated random access preamble index; and
the UE sending the random access request to the network side, wherein the random access request carries the dedicated random access preamble sequence.

5. A system for random access comprising an eNodeB and a user equipment (UE), **characterized in that**
the eNodeB is configured to send to the UE a dedicated random access preamble index of the UE, allocate, in response to a random access request from the UE, physical uplink common control channel (PUCCCH) resources and sounding reference signal (SRS) resources for the UE, and send the allocated PUCCCH resources and SRS resources to the UE; and
the UE is configured to send the random access request to the eNodeB according to the received dedicated random access preamble index.

6. The system according to Claim 5, **characterized in that** the eNodeB is further configured to allocate a TA for the UE according to the random access request, and send the allocated TA to the UE.
